# EUROPEAN PATENT SPECIFICATION

(11) **EP 2 075 371 B1**
(45) Date of publication and mention of the grant of the patent: **01.05.2013**
(21) Application number: 07829456.8
(22) Date of filing: 10.10.2007
(51) Int. Cl.: D06N 3/00, D04H 3/10, D06M 11/00, D06M 11/38, D04H 13/00, B32B 5/26

(54) **LEATHER-LIKE SHEET AND PROCESS FOR PRODUCTION THEREOF**
LEDERARTIGER STOFF UND HERSTELLUNGSVERFAHREN DAFÜR
FEUILLE DE SIMILICUIR ET SON PROCÉDÉ DE FABRICATION

(30) Priority: 11.10.2006 JP 2006277309
(43) Date of publication of application: 01.07.2009
(73) Proprietor: Toray Industries, Inc., Tokyo, 103-8666 (JP)
(72) Inventor: KAJIWARA, Kentaro, Otsu-shi, Shiga 520-8558 (JP); HORIGUCHI, Tomoyuki, Otsu-shi, Shiga 520-8558 (JP); SHIMOYAMA, Satoru, Otsu-shi, Shiga 520-8558 (JP); SEKINE, Kenji, Otsu-shi, Shiga 520-8558 (JP)
(74) Representative: Prüfer & Partner GbR European Patent Attorneys
(86) International application number: PCT/JP2007/069718
(87) International publication number: WO 2008/053674

(56) References cited:
- EP-A2- 1 536 056
- WO-A1-2005/078184
- WO-A1-2007/040144
- JP-A- 2006 002 286
- JP-A- 2006 002 287
- JP-A- 2006 152 476
- JP-A- 2006 233 393
- US-A1- 2001 038 901
- LÜNENSCHLOSS J ET AL: "Vliesstoffe, Herstellungsverfahren für Vliesstoffe" 1 January 1982 (1982-01-01), VLIESSTOFFE, GEORG THIEME VERLAG, STUTTGART (DE), PAGE(S) 122 - 169 , XP002547833 ISBN: 9783136094013 * the whole document *

## Description

### [Technical field]

The present invention relates to a leather-like sheet mainly formed of a nonwoven fabric composed of ultrafine fibers and similar to leather such as suede or nubuck in appearance, and also relates to a production process thereof.

### [Background art]

Leather-like sheets, each consisting of a nonwoven fabric composed of ultrafine fibers and an elastic resin, are widely used, since they have excellent features such as a touch similar to that of natural leather and an easy care property.

As they are used for wider applications, they are required to have a higher level of softness than before, and for satisfying this requirement, various proposals have been made.

In the production of a nonwoven fabric composed of ultrafine fibers, which constitutes a leather-like sheet, a method comprising the steps of cutting the filaments spun from a spinneret into 3 to 100 mm long fibers and forming a staple fiber web by a paper making technique or card laid method.

On the other hand, the spunbond method is very efficient compared with the abovementioned method of producing a staple fiber web, since the fibers spun from a spinneret are directly caught on a catching net, to obtain a fiber web. Further, since the nonwoven fabric obtained as a fiber web by the spunbond method is smaller in the number of fiber cut points than the aforementioned nonwoven fabric obtained as a stable fiber web, it is excellent in physical properties such as tensile strength. For this reason, the application of the nonwoven fabric obtained by the spunbond method to a leather-like sheet is variously studied. For example, patent document 1 proposes a process comprising the steps of preparing a fiber web formed of conjugate fibers, each having two or more polymers stuck together, and splitting the fibers along the sticking interface by needle punching or fluid jet action, to obtain a nonwoven fabric composed of ultrafine continuous filaments.

According to this method, a nonwoven fabric composed of ultrafine fibers can be obtained efficiently, but since ultrafine fibers formed of two or more incompatible polymers exist together, it is difficult to dye in a color like that of the conventional leather-like sheet composed of ultrafine fibers formed of a single polymer. Further, since the fibers are split along the sticking interface to obtain ultrafine fibers, the ultrafine fibers become soft compared with the general fibers with a fiber diameter of more than 1 dtex, but the softness is not sufficient yet. Furthermore, to facilitate splitting, each fiber has a cross section like petals or sections of an orange. Therefore, when the fiber is napped, the direction in which the fiber is bent is limited, and unless the fiber diameter is made so small as to lose sufficient color developability, it is difficult to obtain the lighting effects peculiar to a leather-like sheet. Moreover, for enhancing the abrasion resistance property, it is considered effective to enhance the degree of entanglement of fibers. However, in the case where a needle punch (hereinafter referred to as NP) is used, since strong treatment causes the fibers to be cut, it is difficult to enhance physical properties. In a method of using fluid jet action, since strong treatment causes the water streams to be splashed on the surface of the nonwoven fabric, uniform treatment is difficult. Neither of the means allows sufficient physical properties to be obtained.

Further other means disclosed include a technique of keeping the elongation remaining effective by lowering the spinning speed to lower the degree of orientation, and a technique of using an easily hydrolyzable polymer at least as one component of conjugate fibers so that the nonwoven fabric can be processed with an alkali for weight loss, to hydrolyze and decrease at least one component, thus forming voids in the sheet (for example, see patent document 2).

According to these methods, since the fibers have the elongation kept remaining effective or since the voids are formed, the sheet is highly soft, but since the fibers are low in the degree of orientation, the physical properties of the fibers are likely to decline. Further, the voids tend to lower the form stability of the sheet.

As a further other softening technique, there is a technique in which a nonwoven fabric composed of long fibers is passed through and integrated with a woven or knitted fabric by NP, to make the fibers unlikely to come off, for achieving softness using a smaller amount of a binder or with less melting (for example, see patent document 3). Furthermore, disclosed is a technique in which NP treatment is performed to make the fibers arranged in the thickness direction and to cut the fibers (for example, see patent document 4).

These techniques have such advantages that since the fibers are arranged in the thickness direction, the softness of the sheet can be enhanced and that since the fibers are cut, potential strain can be removed to cause less wrinkling. However, since making the fibers sufficiently arranged in the thickness direction by NP treatment is highly likely to involve fiber cutting, there is a problem that since the fibers are cut, the physical properties as advantages of a nonwoven fabric composed of long fibers and the physical properties of the woven or knitted fabric as a reinforcing fabric decline.

To prevent the cutting of fibers by NP treatment, a technique of increasing shrinkage in the NP step is disclosed (for example, see patent document 5).

Further, for the purpose of easing strain, there is a production process including a step of shrinking with hot water after completion of NP (for example, see patent document 6).

These techniques certainly provide definite effects against the decline of physical properties caused by fiber cutting and against the wrinkling caused by strain, but even if NP is applied under such conditions as to prevent the cutting of fibers, it is difficult to obtain a leather-like sheet with not only strength and form stability but also soft hand.

As described above, a leather-like sheet excellent in soft hand and in the durability of appearance such as abrasion resistance has not been obtained.
[Patent Document 1] JP10-53948A
[Patent Document 2] JP2004-84076A
[Patent Document 3] JP64-20368A
[Patent Document 4] JP2000-273769A
[Patent Document 5] JP2006-2286A
[Patent Document 6] JP2006-2287A

### [Disclosure of the invention]

### [Problems to be solved by the invention]

This invention provides a leather-like sheet excellent in soft hand and in the durability of appearance and weight loss caused by abrasion, and also provides a production process thereof.

### [Means for solving the problems]

This invention has mainly the following constitutions for solving the abovementioned problems. That is, the leather-like sheet of this invention is a composite sheet consisting essentially of a nonwoven fabric composed of ultrafine long fibers in which ultrafine fibers with a fiber fineness of 0.0001 to 0.5 dtex are entangled with each other, and a woven or knitted fabric, characterized in that at least some of the aforementioned ultrafine fibers pass through the woven or knitted fabric, that the appearance is grade 3 or higher while the abrasion loss is 10 mg or less in the evaluation of abrasion resistance, and that the sheet is substantially composed of a fiber material of a non-elastic polymer. Further, the process for producing a leather-like sheet of this invention comprises the step of spinning molten polymers at a speed of 3000 to 6000 m/min and collecting conjugate fibers with a fiber fineness of 1 to 50 dtex on a moving net under suction, followed by the following steps A, B, C and D, wherein the step A is followed by the steps B, C and D, and wherein the step C is performed simultaneously with or subsequently to the step B.
A. Step of treating the conjugate fibers by a needle punch, to form a nonwoven fabric
B. Step of forming ultrafine fibers with a fiber fineness of 0.0001 to 0.5 dtex from the conjugate fibers by a treatment of converting the conjugate fibers into bundles of ultrafine fibers
C. Step of treating the nonwoven fabric with a high velocity fluid
D. Step of laminating and integrating the nonwoven fabric with a woven or knitted fabric

### [Effects of the invention]

This invention can provide a leather-like sheet excellent in soft hand and appearance durability.

### [The best modes for carrying out the invention]

The leather-like sheet of this invention contains a nonwoven fabric composed of ultrafine long fibers. A long fiber of this invention refers to a substantially continuous fiber of more than 100 mm. The leather-like sheet of this invention has cut portions, since the long fibers are partially cut to form nap. In this invention, the lengths of the ultrafine fibers extracted from a nonwoven fabric are directly measured, and a nonwoven fabric containing fibers of more than 100 mm is called a nonwoven fabric composed of long fibers. Further, since long fibers have an advantage that continuous fibers are likely to have high physical properties, it is preferred that the rate of the continuous fibers of more than 100 mm is higher.

The nonwoven fabric composed of ultrafine long fibers is composed of ultrafine fibers with a fiber fineness of 0.0001 to 0.5 dtex. It is preferred that the fiber fineness of the ultrafine fibers is 0.001 tex or more. More preferred is 0.005 dtex or more. Further, 0.3 dtex or less is preferred, and 0.15 dtex or less is more preferred. Less than 0.0001 dtex is not preferred, since the strength declines. More than 0.5 dtex is not preferred either for such reasons that the hand becomes hard and that the surface appearance and the abrasion property of this invention decline since sufficient entanglement is difficult to obtain. Furthermore, fibers with finenesses beyond the abovementioned range may also be contained to such an extent that the effects of this invention are not impaired.

The cross sectional form of the ultrafine fibers of this invention is not especially limited, but it is preferred that the ratio R/r of the diameter R of the minimum circumscribed circle to the diameter r of the maximum inscribed circle in the cross section is 1 to 1.4. A more preferred range is 1 to 1.3. If the R/r in the cross section is more than 1.4, the direction in which the fiber is bent is limited in a flat sectional form, and it is difficult to obtain the lighting effects peculiar to a leather-like sheet, and in a very uneven sectional form, it is likely to be difficult to obtain sufficient color developability. The R/r in the cross section of this invention refers to the value obtained by dividing the diameter of the minimum circumscribed circle measured by observing the section of a fiber using a microscope, etc., by the diameter of the maximum inscribed circuit observed likewise.

The polymer constituting the ultrafine fibers is not especially limited, if it is a non-elastic polymer. The non-elastic polymer in this invention means a polymer other than the fibers excellent in rubbery elasticity such as polyether ester-based fibers and polyurethane-based fibers like so-called Spandex. If the ultrafine fibers are substantially composed of a fiber material of a non-elastic polymer, substantial hand free from rubber-like hand can be achieved, and various effects such as recyclability, high color developability, high light fastness and yellowing resistance can also be achieved. As the non-elastic polymer, for example, polyesters, polyamides, polyolefins, etc. can be used appropriately for respective applications, but in view of dyeability, strength, durability and fastness, a polyester is preferred. The polyester that can be preferably used in this invention is a polymer synthesized from a dicarboxylic acid or an ester formable derivative thereof and a diol or an ester formable derivative thereof. The polymer is not especially limited if it can be used as conjugate fibers. Particularly enumerated are, for example, polyethylene terephthalate, polytrimethylene terephthalate, polytetramethylene terephthalate, polycyclohexylene dimethylene terephthalate, polyethylene-2,6-naphthalene dicarboxylate, polyethylene-1,2-bis(2-chlorophenoxy)ethane-4,4'-dicarboxylate, etc. In this invention, among them, most generally used polyethylene terephthalate or a polyester copolymer mainly containing ethylene terephthalate units can be suitably used.

In the nonwoven fabric composed of ultrafine long fibers of this invention, it is necessary that the ultrafine fibers are entangled with each other. The reason is that if bundles of ultrafine fibers remain in the entangled ultrafine fibers as in the conventional practice, the abrasion resistance property intended in this invention cannot be achieved. The state in which the ultrafine fibers are entangled with each other in this invention refers to a state where the ultrafine fibers are entangled with each other to such an extent that the entanglement between the ultrafine fiber bundles is little observed.

It is preferred that the nonwoven fabric composed of ultrafine long fibers of this invention has a unit-area weight of 30 g/m² or more. More preferred is 40 g/m² or more, and further more preferred is 50 g/m² or more. Further, it is preferred the unit-area weight is 550 g/m² or less. More preferred is 350 g/m² or less, and further more preferred is 150 g/m² or less. It is not preferred that the unit-area weight is less than 30 g/m², since the woven fabric and/or knitted fabric is likely to appear on the surface, to lower appearance quality. Further, it is not preferred either that the unit-area weight is more than 550 g/m², since the abrasion resistance property of this invention tends to decline.

Meanwhile, the unit-area weight is measured according to JIS L 1096 8.4.2 (1999). In the case where the unit-area weight of a nonwoven fabric composed of ultrafine long fibers cannot be directly measured, the difference between the value obtained by measuring the unit-area weight of the leather-like sheet and the unit-area weight of the woven or knitted fabric taken out of the leather-like sheet can also be obtained.

The leather-like sheet of this invention is a sheet in which the aforementioned nonwoven fabric composed of ultrafine long fibers and a woven or knitted fabric are integrated, and it is necessary that at least some of the ultrafine fibers pass through the woven or knitted fabric. The reason is that if the ultrafine fibers pass through the woven or knitted fabric, the separation between the nonwoven fabric composed of ultrafine long fibers and the woven or knitted fabric can be prevented.

In this invention, that at least some of the ultrafine fibers pass through the woven or knitted fabric means that when a section obtained by cutting the sheet in the thickness direction is observed with eyes or a microscope, there exist the ultrafine fibers passing through the woven or knitted fabric, that is, the ultrafine fibers extending from one surface of the woven or knitted fabric to the other surface.

Further, in the leather-like sheet of this invention, it is preferred that among the fibers constituting the woven or knitted fabric, the number of cut fibers is smaller. If the fibers constituting the woven or knitted fabric are not cut, such physical properties as tensile strength and tear strength of the woven or knitted fabric are not impaired, and the movement of the ultrafine fibers passing through the woven or knitted fabric and the ultrafine fibers entangled with the fibers constituting the woven or knitted fabric can be inhibited to improve the abrasion resistance property. When ranges of square shape with side lengths of at least 10 cm (at least 10 cm square) are observed with eyes or a microscope on the front and rear surfaces of the leather-like sheet, it is preferred that five or more cut fiber ends do not exist among the fibers constituting the woven or knitted fabric.

The woven or knitted fabric of this invention is not especially limited, and in response to the intended hand and functions, it can be appropriately selected. For example, in the case where high drapability and stretchability are intended to be achieved, a woven or knitted fabric with high drapability and stretchability can be used as the woven or knitted fabric, to exhibit the intended effects in the leather-like sheet.

The raw material of the woven or knitted fabric is not especially limited, and for example, natural fibers such as cotton, hemp and wool, semi-synthetic fibers such as cellulose fibers, and synthetic fibers can be used, and either staple fibers or long fibers can be selected appropriately. Multiple kinds of fibers can also be used, and for example, blended yarns, mixed yarns or composite yarns consisting of long and short fibers can also be used. Further, a woven fabric consisting of different yarns or a knitted fabric consisting of different yarns can also be used.

Meanwhile, as the synthetic fibers, for example, polyester-based fibers, polyamide fibers, etc. can be used. -It is preferred to use a woven fabric composed of conjugate fibers in which two or more polyester-based polymers are conjugated side by side or in eccentric sheath-core configuration, since the leather-like sheet obtained can have excellent stretchability and drapability.

Furthermore, it is also a preferred mode that side-by-side or eccentric sheath-core conjugate fibers are used as either the warp threads or weft threads of the woven fabric while ordinary fibers are used as the other threads.

The woven fabric is not especially limited in weave, and for example, any of a single weave such plain weave, satin weave or twill weave, a double weave such as figured double cloth with color effect, pile fabric such as velvet, leno cloth such as plain gauze, figured cloth or tapestry can be used.

The knitted fabric is not especially limited in knitting stitch either, and for example, a weft knitted fabric such as plain stitch, rib stitch, interlock stitch or knitting lace, warp knitted fabric such as denbigh stitch, atlas stitch or plain cord stitch can be appropriately selected.

The fibers constituting the woven or knitted fabric are not especially limited in fiber fineness. However, 1 dtex or more is preferred, and 2 dtex or more is more preferred. Further, 15 dtex or less is preferred, and 10 dtex or less is more preferred. If the fiber fineness is less than 1 dtex, the effect of letting the leather-like sheet have sufficient form stability is hard to obtain, and if it is more than 15 dtex, softness is hard to obtain.

In this invention, the unit-area weight of the woven or knitted fabric is not especially limited either. However, 20 g/m² or more is preferred and 40 g/m² or more is more preferred. Further, 170 g/m² or less is preferred and 150 g/m² or less is more preferred. If the unit-area weight is less than 20 g/m², uniformity is likely to decline due to the distortion and slippage of yarns, and the effect of letting the leather-like sheet have sufficient form stability is hard to obtain. On the other hand, if it is more than 170 g/m², softness may be unlikely to be obtained. The unit-area weight of this invention refers to the value measured according to JIS L 1096 8.4.2 (1999).

Further, it is preferred that the ratio by weight of the woven or knitted fabric to the leather-like sheet is 20% or more. More preferred is 30% or more. Furthermore, 80% or less is preferred and 70% or less is more preferred. The reasons are such that if the ratio by weight is less than 20%, it is difficult to sufficiently exhibit such functions of the woven or knitted fabric as form stability, drapability and stretchability, and that if the ratio by weight is more than 80%, the influence of the woven or knitted fabric is so large that the sheet becomes like a woven or knitted fabric, making it difficult to obtain a nonwoven fabric composed of ultrafine long fibers having substantial hand. The ratio by weight of the woven or knitted fabric to the leather-like sheet in this invention refers to the value obtained by dividing the weight of the woven or knitted fabric only by the weight of the leather-like sheet.

It is preferred that the unit-area weight of the leather-like sheet of this invention is 80 g/m² or more, and 100 g/m² or more is more preferred. Further more preferred is 120 g/m² or more. Further, 650 g/m² or less is preferred and 500 g/m² or less is more preferred. Further more preferred is 350 g/m² or less. It is not preferred that the unit-area weight is less than 80 g/m², since it is hard to obtain form stability against tension and tearing, and it is not preferred either that the unit-area is more than 650 g/m², since it is difficult to obtain sufficient softness.

Further, it is preferred that the apparent density of the leather-like sheet of this invention is 0.200 g/cm³ or more, and 0.210 g/cm³ or more is more preferred. Especially preferred is 0.220 g/cm³ or more. Further, 0.500 g/cm³ or less is preferred and 0.400 g/cm³ is more preferred. Especially preferred is 0.350 g/cm³ or less. If the apparent density is less than 0.200 g/cm³, breaking, fluff, etc. occur in the case of dyeing, and it is difficult to obtain sufficient strength and the abrasion resistance property of this invention. Further, it is not preferred that the apparent density is more than 0.500 g/cm³, since it is difficult to obtain the softness intended in this invention.

Meanwhile, the unit-area weight is measured according to JIS L 1096 8.4.2 (1999), and the apparent density is obtained by measuring the unit-area weight according to JIS L 1096 8.4.2 (1999), then measuring the thickness, and obtaining the mean value of the apparent density from them, as the apparent density. In the mean time, for measuring the thickness, a dial thickness gauge (trade name Peacock H, produced by Ozaki Mfg. Co. , Ltd.) is used to measure a sample at arbitrary 10 places, and the mean value is used. In this invention, the apparent density refers to the apparent density of the fiber material.

Furthermore, it is preferred that the tensile strengths of the leather-like sheet of this invention in both warp direction and weft direction are 70 N/cm or more. It is not preferred that the tensile strength in either warp direction or weft direction is less than 70 N/cm, for such reasons that the process passing property in the subsequent process of after-treatment becomes poor in the case where a leather-like sheet is prepared and that breaking, dimensional change and the like tend to occur. Further, in the case where a leather-like sheet is prepared, it is necessary to add a large amount of a binder for obtaining sufficient physical properties, and there also occurs a problem that the hand is likely to be hard. Meanwhile, the upper limit of the tensile strength is not especially limited, but usually it is 200 N/cm or less. The tensile strength is obtained by stretching a 5 cm wide and 20 cm long sample using a constant rate stretching tensile tester at a stress rate of 10 cm/min with a grip distance of 10 cm according to JIS L 1096 8.12.1 (1999). From the obtained value, the load per 1 cm width is calculated to be used as the tensile strength (in N/cm). To obtain these strengths, it is preferred that the fibers used have a strength of 2 cN/dtex or more.

Furthermore, the tear strengths of the leather-like sheet of this invention in both warp direction and weft direction are 5 to 30 N. If the tear strength in either warp direction or weft direction is less than 3 N, the processing passing property declines, making stable production difficult. On the contrary, it is not preferred either that the tear strength in either warp direction or weft direction is more than 50 N, since the leather-like sheet tends to be generally so softened that it is difficult to achieve a balance between the softness and the hand. Meanwhile, the tear strength is measured based on JIS L 1096 8.15.1 (1999) Method D (pendulum method).

These tear strengths can be achieved by adjusting the apparent density in an appropriate range, and in general, a higher density tends to result in lower strengths.

It is preferred that the stress of the leather-like sheet of this invention in warp direction at an elongation of 10% is 8 N/cm or more, for preventing the sheet from being deformed or broken in the subsequent process performed for any particular application. More preferred is 10 N/cm. The upper limit of the stress at an elongation of 10% is not especially limited, but more than 50 N/cm is not preferred for such reasons that the hand becomes hard and that workability declines. In the case where the abovementioned production method is used for production, the value of stress at an elongation of 10% can be enhanced if NP treatment and high velocity fluid treatment are sufficiently performed. Further, also by laminating a woven fabric and/or a knitted fabric or the like, the value of stress can be increased.

In the meantime, to obtain the stress (modulus) at an elongation of 10%, the same method as the method of measuring the tensile strength is used to measure the strength at an elongation of 10% as the intended value.

Furthermore, the abovementioned physical properties of the leather-like sheet are important factors for obtaining the abrasion resistance property of this invention, and they can be achieved since the ultrafine fibers are entangled with each other as described later.

Moreover, in the abrasion resistance evaluation of the leather-like sheet of this invention, the appearance is grade 3 or higher and the abrasion loss is 10 mg or less.

With regard to the abrasion resistance evaluation of this invention, in an abrasion resistance test measured according to JIS L 1096 (1999) 8.17.5 Method E (Martindale method) Load for Furniture (12 kPa), after performing 3000 times and 20000 times of abrasion, the appearance of the test fabric is judged in reference to the criterion table of JIS L 1076 (1999) Table 2. In this invention, the appearance must be grade 3 to 5 after 3000 times and 20000 times. Lower than grade 3 indicates that sufficient appearance quality is not obtained, and grade 5 is the most preferred state in evaluation. In the past, for a napped leather-like sheet, the appearance was evaluated by the number times counted with breaking as the end point or, for example, as described in JP2003-268680A, with the exposure of the woven fabric layer as the end point. However, there were cases where fluff and pills occurred when the woven fabric layer was not exposed yet, to pose a problem that the number of times counted till the woven fabric layer was exposed did not always agree with the durability of the surface. So, in the abrasion resistance evaluation of this invention, the criterion table of JIS L 1076 (1999) Table 2 is used to evaluate the change of appearance such as the presence or absence of pills after 3000 times assuming short-term use and after 20000 times assuming long-term use. It is important for showing form stability that the appearance does not change greatly especially after 20000 times, but there are also cases where the appearance changes greatly even after use for a short period of time. Therefore, in this invention, it can be considered that if no changes occur after 3000 times, a further higher level of durability is achieved. Moreover, in the abrasion resistance test measured according to JIS L 1096 (1999) 8.17.5 Method E (Martindale method) Load for Furniture (12 kPa), the abrasion loss after 20000 times is 10 mg or less. An abrasion loss of 5 mg or less is more preferred. It is not preferred that the abrasion loss is more than 10 mg, since nap tends to be deposited on the garment, etc. in actual use. On the other hand, the lower limit is not especially limited, and as the napped leather-like sheet of this invention, a sheet with little abrasion loss can also be obtained.

Further, it is preferred that the stiffness of the leather-like sheet of this invention is 0.1 to 1.0 mN. If the stiffness is less than 0.1 mN, the form stability is likely to be insufficient, and the hand is likely to be non-substantial. On the other hand, it is not preferred that the stiffness is more than 1.0 mN, since softness is insufficient. Meanwhile, the stiffness of this invention is the value obtained by measuring a 38 mm long and 25 mm wide sample in the bending repulsion test measured according to JIS L 1096 (1999) 8.20.1 Method A (Gurley method). These stiffness values can be achieved by adjusting the stiffness, unit-area weight and apparent density of the woven or knitted fabric in appropriate ranges.

The leather-like sheet of this invention does not substantially contain an elastomer such as polyurethane, and is substantially formed of a fiber material of a non-elastic polymer.

Being "substantially formed of a fiber material of a non-elastic polymer" means that the content of a binder composed of an elastomer such as polyurethane is less than 5 wt% based on the weight of fibers. It is preferred that the binder content is less than 3 wt% based on the weight of fibers, and it is more preferred that the binder content is less than 1 wt% based on the weight of fibers. It is most preferred that no binder is contained.

The fibers of a non-elastic polymer referred to here mean a polymer other than the fibers excellent in rubbery elasticity such as polyether ester-based fibers and polyurethane-based fibers like so-called Spandex, and especially for chemical recycling, it is preferred that the fiber material is polyethylene terephthalate or nylon 6. Meanwhile, it is most preferred that the leather-like sheet of this invention does not contain an elastomer such as polyether ester-based fibers or polyurethane-based fibers like Spandex at all, but the leather-like sheet may contain an elastomer to such an extent that the effects of this invention are not impaired. Further, the leather-like sheet can also contain functional chemical compounds, for example, dye, softening agent, texture agent, pilling preventive, antimicrobial agent, deodorant, water repellent, light resistant and weathering agent.

The leather-like sheet of this invention consists of a nonwoven fabric composed of ultrafine long fibers and a woven or knitted fabric, and is a leather-like sheet substantially formed of a fiber material of a non-elastic polymer.

The leather-like sheet referred to here has excellent surface appearance like natural leather such as suede, nubuck or grain side. The leather-like sheet especially preferred in this invention has napped appearance like suede or nubuck, smooth touch and excellent lighting effects.

Further, it is preferred that the fibers constituting the nonwoven fabric composed of ultrafine long fibers in the leather-like sheet of this invention has nap formed. The length of the nap is not especially limited, and the leather-like sheet can have nap of various lengths like velours or natural leather such as suede or nubuck. However, in view of excellent abrasion resistance property of this invention, nubuck-like appearance with nap of a short length is preferred. Further, it is preferred that the nonwoven fabric composed of ultrafine long fibers is dyed.

Furthermore, a structure in which the woven or knitted fabric is held between a nonwoven fabric composed of ultrafine long fibers and another identical or different nonwoven fabric is also preferred since nonwoven fabrics appear on both surfaces, to provide appearance quality different from that of the woven or knitted fabric.

The method for producing the leather-like sheet of this invention is explained below.

At first, the method for producing the nonwoven fabric composed of ultrafine long fibers of this invention is explained.

The method for producing so-called ultrafine fibers with the fiber fineness kept in a range from 0.0001 to 0.5 dtex is not especially limited. For example, there is a method of spinning ultrafine fibers directly. In another method, fibers (conjugate fibers) with an ordinary fineness, which can be converted into bundles of ultrafine fibers, are spun and converted into bundles of ultrafine fibers by a treatment (ultrafining treatment) for converting into bundles of ultrafine fibers.

The method of using conjugate fibers can be such a means as a method of spinning islands-in-sea type conjugate fibers and removing the sea component or a method of spinning splittable conjugate fibers and splitting them into bundles of ultrafine fibers. Among them, in this invention, it is preferred to use islands-in-sea type conjugate fibers or splittable conjugate fibers for production of ultrafine fibers, since the ultrafine fibers can be easily and stably obtained. It is more preferred to use islands-in-sea type conjugate fibers for production of ultrafine fibers, since ultrafine fibers formed of the same polymer capable of being dyed with the same dye can be easily obtained in the produced leather-like sheet.

An islands-in-sea type conjugate fiber in this invention is a fiber having a fiber section consisting of islands and sea obtained by conjugating and mixing two or more components at a desired stage. The method for obtaining the fibers is not especially limited. For example, there are the following methods: (1) a method in which two or more component polymers are blended as chips, followed by spinning, (2) a method in which two or more component polymers are kneaded beforehand to form chips, followed by spinning, (3) a method in which two or more molten component polymers are mixed in a stationary mixer or the like in a pack of a spinning machine, (4) a die described in JP44-18369B or JP54-116417A, etc. is used for production, etc. In this invention, any of these methods can be used for good production, but in view of easy selection of polymers, it is preferred to use the abovementioned method (4).

For transforming islands-in-sea type conjugate fibers into a nonwoven fabric composed of long fibers, for example, the aforementioned polymers can be discharged from the die shown in the abovementioned method (4), and stretched at a speed of 3000 to 6000 m/min by an air jet method or roller method, being caught on a catching surface of a web conveyor or the like. In this case, it is preferred in view of productivity to perform stretching and catching continuously by an air jet method, since winding once followed by carding is not required. The air jet method referred to here is a method of pulling and stretching spun filaments by air using an ejector or air sucker.

Meanwhile, in the case where splittable conjugate fibers are used, two or more components can be conjugated mainly in a die, to produce the splittable conjugate fibers by a method similar to the abovementioned method for producing islands-in-sea type conjugate fibers.

In the method (4), the sectional form of an islands-in-sea type conjugate fiber and the sectional form of the island fibers obtained by removing the sea component are not especially limited, and, for example, can be a circle, polygon, Y, H, X, W, C, π, etc. However, in this invention, since it is preferred that the ratio R/r of the diameter R of the minimum circumscribed circle to the radius r of the maximum inscribed circle in the section is in a range from 1 to 1.4 as described before, it is preferred that the sectional form for achieving this range is a circle.

Further, the number of polymers used is not especially limited, but considering spinning stability and dyeability, two or three components are preferred. Especially it is preferred that a fiber consists of two components, namely, one sea component and one island component. Furthermore, it is preferred that the component ratio in this case is 0.30 or more as the ratio by weight of the island fibers to the islands-in-sea type conjugate fiber. More preferred is 0.40 or more, and further more preferred is 0.50 or more. Moreover, it is preferred that the upper limit of the ratio by weight is 0.99 or less. More preferred is 0.97 or less, and further more preferred is 0.80 or less. It is not preferred in view of cost that the ratio is less than 0.30, since the island component removing rate is large. Furthermore, more than 0.99 is not preferred either in view of spinning stability, since the island component fibers are likely to be combined with each other.

Further, the polymers used are not especially limited. For example, as the island component, a polyester is preferred in view of dyeability, strength, durability and fastness as described above.

The polymer used as the sea component of the islands-in-sea type conjugate fiber is not especially limited, if it has chemical properties of dissolvability and decomposability higher than those of the polymer constituting the island component. Though depending on the polymer selected to constitute the island component, for example, a polyolefin such as polyethylene or polystyrene, or a polyester copolymerized with 5-sodium sulfoisophthalic acid, polyethylene glycol, sodium dodecylbenzenesulfonate, bisphenol A compound, isophthalic acid, adipic acid, dodecanedioic acid or cyclohexylcarboxylic acid or the like can be used. In view of spinning stability, polystyrene is preferred, but a copolyester having sulfone groups is preferred, since it can be easily removed without using an organic solvent. As the copolymerization rate, 5 mol% or more is preferred in view of processing rate and stability, and 20 mol% or less is preferred in view of easy polymerization, spinning and stretching. A combination preferred in this invention is to use a polyester as the island component and polystyrene or a copolyester having sulfone groups as the sea component.

Inorganic particles such as titanium oxide particles may also be added to these polymers for enhancing the hiding power. In addition, a lubricant, pigment, thermal stabilizer, ultraviolet absorbent, conducting agent, heat accumulating agent, antibacterial agent, etc. can also be added for various purposes.

The fiber fineness of the conjugate fibers obtained as described above is in a range from 1 to 50 dtex. It is not preferred that the fiber fineness is less than 1 dtex, since the cutting of fibers by the NP described later and the unlikelihood of being caught by needle barbs make it difficult to obtain a sufficient strength, and more than 50 dtex is not preferred either, since the needles are likely to be broken.

The fiber fineness of the ultrafine fibers obtained from the conjugate fibers is 0.0001 dtex or more. More preferred is 0.001 dtex or more, and further more preferred is 0.005 dtex or more. Further, the fiber fineness is 0.5 dtex or less. More preferred is 0.3 dtex or less, and further more preferred is 0.15 dtex or less. Less than 0.0001 dtex is not preferred, since the strength declines. More than 0.5 dtex is not preferred either, for such reasons that the hand becomes hard and that since it is difficult to achieve sufficient entanglement in the high velocity fluid treatment described later, there arises such a problem that the surface appearance and the abrasion resistance property of this invention decline. Further, fibers with finenesses beyond the abovementioned range can also be contained to such an extent that the effects of this invention are not impaired.

The method for keeping the fiber fineness of the ultrafine fibers in such a range is not especially limited, and the fiber fineness in the range can be easily achieved by adjusting the amount of the island component polymer supplied when the abovementioned conjugate fibers are produced.

The method for producing a nonwoven fabric composed of ultrafine long fibers is explained below.

In this invention, the steps following the abovementioned step of collecting conjugate fibers of 1 to 50 dtex include the following.
A. Step of treating the conjugate fibers by a needle punch, to form a nonwoven fabric
B. Step of forming ultrafine fibers with a fiber fineness of 0.0001 to 0.5 dtex from the conjugate fibers by a treatment of converting the conjugate fibers into bundles of ultrafine fibers
C. Step of treating the nonwoven fabric with a high velocity fluid
D. Step of laminating and integrating the nonwoven fabric with a woven or knitted fabric

That is, after the ultrafine fibers are obtained, they can be transformed into a nonwoven fabric. However, the method preferably employed for producing the nonwoven fabric in this invention is the abovementioned method comprising (A) the step of treating the conjugate fibers by a needle punch, for forming a nonwoven fabric, subsequently (B) the step of converting the conjugate fibers into ultrafine fibers, to obtain a nonwoven fabric composed of ultrafine fibers, and (C) the step of treating with a high velocity fluid for entangling the ultrafine fibers.

It is preferred that the nonwoven fabric composed of conjugate fibers is made to have an apparent density of 0.120 g/cm³ or more by (A) the step of treating the conjugate fibers by NP. More preferred is 0.150 g/cm³ or more. Further, 0.300 g/cm³ or less is preferred, and 0.250 g/cm³ is more preferred. Less than 0.12 0g/cm³ is not preferred, since the entanglement is insufficient, making it difficult to obtain the intended physical properties. Furthermore, though the upper limit is not especially specified, more than 0.300 g/cm³ is not preferred either, since such problems as cutting of fibers, breaking of needles and remaining of needle holes are likely to occur.

In this invention, it is preferred that the NP treatment has a role of temporary fastening for obtaining the process passing property and sufficiently entangles the fibers, but since the abrasion resistance property of this invention can be obtained in the high velocity fluid treatment described later, it is preferred that NP treatment is performed to such an extent that the fibers are not cut. Meanwhile in the case where (D) the step of laminating and integrating with the woven or knitted fabric is performed in the step of performing NP treatment as in the conventional process, the possibility of cutting the fibers constituting the woven or knitted fabric in addition to the aforementioned cutting of the fibers of the nonwoven fabric is high, but since the woven or knitted fabric is laminated and integrated by the high velocity fluid treatment described later in this invention, a leather-like sheet with both high physical properties and soft hand can be obtained without such a problem.

It is preferred that the nonwoven fabric composed of conjugate fibers obtained as described above are shrunken by dry heat and/or wet heat, to be further densified. After the conjugate fibers are used and transformed into a nonwoven fabric composed of the conjugate fibers, the conjugated fibers are converted into bundles of ultrafine fibers by (B) the step of treating the conjugate fibers for conversion into bundles of ultrafine fibers with a fiber fineness of 0.0001 to 0.5 dtex, to form a nonwoven fabric composed of ultrafine long fibers. The treatment method for forming ultrafine fibers is not especially limited, and for example, a mechanical method or chemical method can be used. A mechanical method is a method for forming ultrafine fibers by giving physical stimulation. For example, a method of giving impact such as the abovementioned NP method or the water jet punching (hereinafter referred to as WJP) method can be used, or a method of pressurizing between rollers or an ultrasonic treatment method can also be used. Further, as a chemical method, for example, a method of changing at least one of the components constituting the conjugate fibers by swelling, decomposing or dissolving using a chemical compound can be used. Especially a method of forming a nonwoven fabric composed of conjugate fibers containing an alkali decomposable sea component and treating it with a neutral or alkaline aqueous solution for converting the conjugate fibers into bundles of ultrafine fibers is one of preferred modes in this invention, since the method is preferred in view of working environment free from the use of any solvent. The neutral to alkaline aqueous solution referred to here is an aqueous solution with pH 6 to 14, and the chemical compound or the like used is not especially limited. For example, an aqueous solution containing an organic or inorganic salt with the pH kept in the abovementioned range can be used, and examples of the salt include alkali metal salts such as sodium hydroxide, potassium hydroxide, lithium hydroxide, sodium carbonate and sodium hydrogencarbonate and alkaline earth metal salts such as calcium hydroxide and magnesium hydroxide. Further, as required, an amine such as triethanolamine, diethanolamine or monoethanolamine, or weight loss accelerator, carrier, etc. can also be used together. Above all, sodium hydroxide is preferred in view of cost, handling easiness, etc. Further, after the sheet is treated with the abovementioned neutral to alkaline aqueous solution, it is preferred to remove the chemical compound, decomposition product, etc. remaining after neutralization and washing as required, before drying.

As described above, after a nonwoven fabric composed of long conjugate fibers is obtained in the (A) step, the conjugate fibers are converted into bundles of ultrafine fibers, to form a nonwoven fabric composed of ultrafine long fibers in the (B) step. It is preferred to perform the (C) step of treating with a high velocity fluid, for example, performing WJP treatment by water streams, simultaneously with or subsequently to the (B) step. The combination of NP treatment and high velocity fluid treatment allows the ultrafine long fibers to be highly entangled. The leather-like sheet of this invention can be produced especially by the abovementioned process due to the difference between the fibers likely to be entangled by NP and the fibers likely to be entangled by high velocity fluid treatment. That is, this invention uses NP treatment for thick fibers of 1 to 50 dtex, since excellent entanglement of thick fibers tends to be obtained by NP, and uses high velocity fluid treatment for ultrafine fibers of 0.0001 to 0.5 dtex, since excellent entanglement of ultrafine fibers tends to be obtained by high velocity fluid treatment. For combining these fiber finenesses and entanglement methods, the most preferred production method comprises the steps of sufficiently entangle conjugate fibers with a fineness of 1 to 50 dtex by NP, converting the conjugate fibers into bundles of ultrafine fibers, to obtain ultrafine fibers of 0.0001 to 0.5 dtex, and subsequently performing high velocity fluid treatment. At this time, it is preferred to perform the (D) step of laminating and integrating a woven or knitted fabric with the nonwoven fabric composed of ultrafine long fibers by laminating the woven or knitted fabric and performing high velocity fluid treatment. In the case where the unit-area weight of the nonwoven fabric composed of ultrafine long fibers is high when the nonwoven fabric composed of ultrafine long fibers is treated with a high velocity fluid, the rebound of the fluid increases, making uniform treatment difficult. Therefore, it is difficult to obtain a highly entangled nonwoven fabric with a high unit-area weight by high velocity fluid treatment.

In this invention, it is found that a woven or knitted fabric is laminated, a leather-like sheet with a high unit-area weight can be obtained even though the unit-area weight of the nonwoven fabric is low, and that since the load of NP treatment can be lessened compared with the method of laminating in the NP step, the problem that the physical properties are lowered by the cutting of the conjugate fibers of the nonwoven fabric and the fibers of the woven or knitted fabric is unlikely to occur. Especially in view of tensile strength, tear strength and abrasion resistance property, it is preferred that the fibers constituting the woven or knitted fabric are not cut, and by laminating and integrating the woven or knitted fabric and the nonwoven fabric composed of ultrafine long fibers by high velocity fluid treatment, a leather-like sheet can be obtained without cutting the fibers constituting the woven or knitted fabric.

Further, if the obtained nonwoven fabric composed of ultrafine long fibers and the woven or knitted fabric are integrated, such intended functions as hand can be provided by the woven or knitted fabric. For example, for obtaining a highly drapable and stretchable leather-like sheet, the nonwoven fabric can be integrated with a highly drapable and stretchable woven or knitted fabric, to obtain a leather-like sheet capable of exhibiting the intended effects.

The method for producing the woven or knitted fabric is not especially limited, and a loom suitable for the necessary weave can be used. Examples of the loom include an air jet loom, water jet loom, fly shuttle loom, etc. In this case, if the weave density is too low, the reinforcement effect of the woven fabric declines, and if the weave density is too high, the rebound of the fluid during high velocity fluid treatment increases, not allowing stable processing. Therefore, it is preferred that adequate spaces are available between warp threads and weft threads.

On the other hand, the method for producing the knitted fabric is not especially limited either. A knitting machine suitable for the necessary stitch can be used. Examples of the knitting machine include a weft knitting machine, circular knitting machine, tricot machine, raschel machine, etc.

As methods for integrating the woven or knitted fabric and the nonwoven fabric composed of ultrafine long fibers respectively obtained as described above, it is known that any one or more as a combination of various methods such as methods of entangling using such a means as NP treatment or high speed fluid treatment and methods of bonding can be employed. In this invention, among these methods, in view of excellent drapability, a method of entangling is employed, and since entanglement can be achieved without damaging the knitted fabric, high velocity fluid treatment is used.

It is preferred that the twist number of the yarns constituting the woven or knitted fabric is 100 T/m or more. More preferred is 200 T/m or more. Further, 2000 T/m or less is preferred, and 1800 T/m or less is more preferred. The reasons are that if the twist number is less than 100 T/m, the water penetration capability of the woven or knitted fabric becomes low, and during high velocity fluid treatment, the fluid is rebounded, making uniform processing difficult, hence making it difficult to raise the flow rate, and that if the twist number is more than 2000 T/m, the hand is likely to be hard. The twist number in this invention is obtained by untwisting a yarn under a load of 90 x 10⁻³ cN/dtex by a twist counter, and dividing the number of untwisting times found when the yarn has been completely untwisted, by the length of the untwisted yarn.

In the case where high velocity fluid treatment is used for integrating the nonwoven fabric composed of ultrafine long fibers and the woven or knitted fabric, the high velocity fluid treatment of the (C) step also for integration in the (D) step can be performed also for the conversion treatment of the nonwoven fabric composed of conjugate long fibers into bundles of ultrafine fibers in the (B) step. That is, the treatment for converting into bundles of ultrafine fibers and the high velocity fluid treatment for achieving entanglement are performed simultaneously. Using high velocity fluid treatment for both converting splittable conjugate fibers into bundles of ultrafine fibers and achieving entanglement or for both dissolving the component soluble in the high velocity fluid and achieving entanglement allows the process to be simplified. However, performing high velocity fluid treatment at least also after the conversion treatment into bundles of ultrafine fibers has been virtually completed is preferred for making more ultrafine fibers entangled with each other. Further, performing high velocity fluid treatment after completion of the conversion treatment into bundles of ultrafine fibers is preferred.

As the high velocity fluid treatment, in view of working environment, it is preferred to perform WJP treatment using water streams. In this case, it is preferred that the water is in the state of columnar streams. Columnar streams can be usually obtained by jetting through holes with a diameter of 0.06 to 1.0 mm at a pressure of 1 to 60 MPa. To achieve efficient entanglement and to obtain good surface appearance, it is preferred that the treatment is performed using holes with a diameter of 0.06 to 0.20 mm arranged at intervals of 5 mm or less. It is more preferred to use holes with a diameter of 0.06 to 0.15 mm at intervals of 1 mm or less. In the case where the high velocity fluid treatment is performed multiple times, the diameter and intervals of the holes are not required to be always identical. For example, a nozzle with a large hole diameter and a nozzle with a small hole diameter can also be used together. However, it is preferred to use a nozzle with holes of the abovementioned configuration at least once. Especially it is not preferred that the hole diameter is more than 0.20 mm, since the impact marks of water streams are strongly given to the surface, to lower the smoothness. Further, it is not preferred either that the hole diameter is less than 0. 06 mm, because of the problem that the holes are likely to be clogged, and therefore that water must be precisely filtered to raise the cost.

Furthermore, the water jet runs toward the nonwoven fabric, and some of the water is rebounded from the top surface of the nonwoven fabric while the other water passes through a suction box, to be removed. In this case, though the water rebounded from the top surface of the nonwoven fabric adversely affects the uniform treatment, it is found that since the woven or knitted fabric is laminated as described before, the water penetration capability can be enhanced to increase the rate of the water passing through the suction box and removed. Therefore, the laminated woven or knitted fabric allows processing under conditions stronger than before, to obtain the intended abrasion resistance property.

Further, for the purpose of achieving uniform entanglement in the thickness direction and/or for the purpose of improving the smoothness of the surface of the nonwoven fabric, the treatment is preferably repeated many times. Furthermore, the water stream pressure should be selected appropriately in response to the unit-area weight of the nonwoven fabric to be treated, and it is preferred to use a higher pressure for a nonwoven fabric with a larger unit-area weight. The multiple times referred to here mean the number of times when the nonwoven fabric passes each nozzle plate having holes arranged in the direction perpendicular to the conveyor and/or cylinder carrying the nonwoven fabric.

Meanwhile, before the nonwoven fabric composed of conjugate long fibers or the nonwoven fabric composed of ultrafine fibers is treated with a high velocity fluid, the nonwoven fabric may also be treated by immersion in a fluid. Further, as a method for improving the surface appearance, the nozzle head may be moved relatively in the direction different from the progress direction of the conveyor and/or cylinder carrying the nonwoven fabric, or after completion of entanglement, a wire mesh screen or the like can be inserted between the nonwoven fabric and the nozzle for water sprinkling treatment. In this way, the ultrafine fibers can be entangled with each other till the 10% modulus in the warp direction becomes preferably 8 N/cm or more, more preferably 10 N/cm or more.

In general, in case of ultrafine fibers obtained from conjugate fibers, ultrafine fiber bundles, each bundle consisting of ultrafine fibers, are mainly entangled with each other, but if the nonwoven fabric composed of ultrafine long fibers of this invention is treated as described above, a nonwoven fabric composed of ultrafine fibers in which the ultrafine fibers are highly entangled with each other to such an extent that the entanglement between the ultrafine fiber bundles is little observed can be obtained. Further, this achievement can also improve the surface properties such as abrasion property in this invention.

Further, since the lamination between the woven or knitted fabric and the nonwoven fabric composed of ultrafine long fibers can be achieved with entanglement and integration by the high velocity fluid treatment, it is preferred to perform the abovementioned (C) and (D) steps simultaneously. With this operation, the high velocity fluid treatment intended for entangling the ultrafine fibers with each other and the lamination and integration with the woven or knitted fabric can be performed simultaneously to simplify the process. Further, since the fibers are not cut unlike the lamination and integration by NP, high physical properties can be obtained. In this case, it is necessary that at least some of the ultrafine fibers pass through the woven or knitted fabric. The passing of the ultrafine fibers through the woven or knitted fabric can be achieved by greatly moving the fibers during the high velocity fluid treatment. Therefore, the passing can be achieved by such means as adjusting the entanglement achieved by NP without making extremely strong entanglement, using a nozzle with a larger hole diameter for the high velocity fluid treatment, enhancing the pressure of high velocity fluid treatment, and lowering the processing velocity of high velocity fluid treatment.

Furthermore, a structure in which the woven or knitted fabric is held between a nonwoven fabric composed of ultrafine long fibers and another identical or different nonwoven fabric is also preferred since nonwoven fabrics appear on both surfaces, to provide an appearance quality different from that of the woven or knitted fabric. The means for obtaining this structure is not especially limited. For examples, fibers with an average fiber length of 0.1 to 1 cm and an average fiber fineness of 0.01 to 0.5 dtex are beaten in water containing a water soluble resin, etc., to prepare a dispersion with the fibers dispersed at a concentration of about 0.0001 to about 0.1 wt%, and the dispersion is, for example, deposited on a wire mesh screen to drain, for producing a nonwoven fabric composed of staple fibers. This nonwoven fabric and a woven or knitted fabric are entangled with each other beforehand by high velocity fluid treatment, and this laminate is overlaid on a nonwoven fabric composed of ultrafine long fibers with the woven or knitted fabric kept in contact with the nonwoven fabric composed of ultrafine long fibers. The laminate is further treated with a high velocity fluid, to obtain a leather-like sheet consisting of a nonwoven fabric composed of ultrafine fibers, a woven or knitted fabric and a nonwoven fabric composed of staple fibers.

Moreover, it is preferred that the leather-like sheet of this invention is napped at least on one surface. Meanwhile, the leather-like sheet of this invention is substantially formed of a fiber material but has surface appearance similar to that of general natural leather or artificial leather unlike a mere nonwoven fabric. Further, as described above, in view of the abrasion property of this invention, it is preferred that the nap length is shorter. As the means for obtaining nap, raising treatment using sand paper, brush or the like is preferred. If the leather-like sheet is dyed, the raising treatment can be performed before and/or after dyeing.

Further, it is preferred that the leather-like sheet is dyed. The method for dyeing the nonwoven fabric composed of ultrafine staple fibers is not especially limited, and the dyeing machine used can be a jet dyeing machine, thermosol dyeing machine or high pressure jigger dyeing machine, etc. In view of the excellent hand of the obtained leather-like sheet, it is preferred to use a jet dyeing machine for dyeing.

For the purpose of further enhancing the abrasion resistance property in this invention, fine particles can be added to the napped leather-like sheet of this invention.

In the case where fine particles are added, the material of the fine particles is not especially limited, if the particles are insoluble in water. Examples of the fine particles include inorganic materials such as silica, colloidal silica, titanium oxide, aluminum and mica and organic materials such as melamine resin.

In view of excellent washing durability and the effect of enhancing the abrasion resistance property, it is preferred that the average particle size of the fine particles is 0.001 µm or more. More preferred is 0.01 µm or more, and further more preferred is 0.05 µm or more. Further, 30 µm or less is preferred, and 20 µm or less is more preferred. Further more preferred is 10 µm or less. Meanwhile, the average particle size of the fine particles can be measured by using a measuring method suitable for the material and size of the fine particles, for example, by a BET method, laser method, dynamic scattering method, coal tar method, etc. In this invention, the volume (mass) average particle size obtained using a BET method is especially preferred.

It is preferred that the fine particle content is 0.01 wt% or more based on the weight of the leather-like sheet for such reasons that the hand of the leather-like sheet is not hard and that the effect of enhancing the abrasion resistance can be obtained. More preferred is 0.02 wt% or more, and further more preferred is 0.05 wt% or more. Further, 10 wt% or less is preferred, and 5 wt% or less is more preferred. Further more preferred is 1 wt% or less.

The means for adding the fine particles can be adequately selected from a pad method, a method of using a jet dyeing machine or jigger dyeing machine, a method of spraying with a spray, etc. Further, a texture agent and anti-pilling agent can be added to the sheet as required. The means for adding a texture agent and anti-pilling agent can be adequately selected from a pad method, a method of using a jet dyeing machine or jigger dyeing machine, a method of spraying with a spray, etc.

Further, for obtaining soft hand and smooth surface touch, it is preferred that the leather-like sheet of this invention contains a softening agent. As the softening agent, it is preferred to adequately select from those generally used for woven and knitted fabrics in response to the material of fibers. For example, they can be adequately selected from the names of texture agents and soft finishing agents enumerated in Senshoku Note (= Dyeing Notebook) 23rd edition, (published on August 31 2002 by Kabushiki Kaisha Shikisensha Co., Ltd.). Among them, in view of excellent softness effect, a silicone-based emulsion is preferred, and an amino-modified or epoxy-modified silicone-based emulsion is more preferred. If any of these softening agents is contained, the abrasion resistance tends to decline. Therefore, it is preferred to appropriately adjust the amount of the softening agent and the amount of the abovementioned fine particles in reference to the balance between the intended hand and the abrasion resistance property. Therefore, though the amount is not especially limited, a range from 0.01 to 10 wt% based on the weight of the leather-like sheet is preferred in view of the balance between the hand and the abrasion resistance property and less stickiness.

The means for adding a softening agent to the leather-like sheet can be adequately selected from a pad method, a method of using a jet dyeing machine or jigger dyeing machine, a method of spraying with a spray, etc., as in the case of adding fine particles. In view of cost, it is preferred to add the fine particles and the softening agent simultaneously. Meanwhile, it is preferred that the fine particles and the softening agent are added after dyeing. It is not preferred that they are added before dyeing, for such reasons that they may come off during dyeing to reduce the effects and that irregular dyeing may occur.

### [Examples]

This invention is explained below in more detail in reference to examples. The physical property values of the examples were measured according to the methods described below.

### (1) Unit-area weight and apparent density

The unit-area weight was measured according to the method of JIS L 1096 8.4.2 (1999). Further, the thickness was measured using a dial thickness gauge (trade name "Peacock H", produced by Ozaki Mfg. Co., Ltd.), and the apparent density was obtained by calculation from the value of unit-area weight.

### (2) Abrasion resistance property

In the abrasion resistance test measured according to JIS L 1096 (1999) 8.17.5 Method E (Martindale method) Load for Furniture (12 kPa), the weight loss of the test fabric was evaluated after 3000 times and 20000 times of abrasion, and the grade of appearance was judged in reference to the criterion table of JIS L 1076 Table 2. Of the results, with regard to appearance, the lower grade was employed as the evaluation result, and with regard to weight loss, the weight loss after 20000 times was employed as the evaluation result.

### (3) Stiffness

In the bending repulsion test measured according to JIS L 1096 (1999) 8.20.1 Method A (Gurley method), a 38 mm long and 25 mm wide sample was measured.

### (4) Cross sectional form and ratio R/r of the diameter R of the minimum circumscribed circle to the radius r of the maximum inscribed circle of ultrafine fibers

The cross sectional form of an ultrafine fiber was observed with an electron microscope, to obtain the cross sectional form and the ratio R/r of the diameter R of the minimum circumscribed circle to the diameter r of the maximum inscribed circle.

### (5) Appearance

The appearance of a napped surface was visually evaluated in reference to a three-step criterion of the following double circle, single circle and triangle.
Double circle: Color, nap and smoothness were uniform, and lighting effects were obtained
Single circle: Color, nap and smoothness were not uniform, but lighting effects were obtained.
Triangle: Color, nap and smoothness were not uniform, and lighting effects were not obtained.

### Production Example 1 (Production of a woven fabric)

A low viscosity component consisting of 100% polyethylene terephthalate (PET) with an intrinsic viscosity of 0.40 and a high viscosity component consisting of PET with an intrinsic viscosity of 0.75 conjugated side by side at a conjugation ratio by weight of 50:50 were spun and stretched to obtain 12 side-by-side conjugate fiber filaments of 56 dtex. They were twisted in the S twist direction at a twist number of 2400 t/m and set with steam at 75°C. The yarn was used as warp and weft, to form a plain weave as a woven fabric with a weave density of 93 x 64 yarns/2.54 cm and 57 g/m². The woven fabric was relaxed at 110°C for 20 minutes using a jet dyeing machine, to obtain a woven fabric with a unit-area weight of 85 g/m².

### Production Example 2 (Production of a knitted fabric)

PET 100% with an intrinsic viscosity of 0.65 was spun and stretched to obtain 12 fiber filaments of 56 dtex. They were twisted in the S direction at a twist number 1500 t/m and set with steam at 65°C, being used to obtain a double circular knitted fabric of 44 gauge and 77 g/m².

### Production Example 3 (Production of a nonwoven fabric composed of staple fibers)

PET with an intrinsic viscosity of 0.65 was spun, stretched and cut to obtain 5 mm long staple fibers of 0.3 dtex. A paper making technique was used to obtain a nonwoven fabric composed of staple fibers with a unit-area weight of 20 g/m².

### Working Example 1

A conjugate spinning apparatus heated to 290°C was used to extrude 50 parts of PET copolymerized with 8 mol% of 5-sodium sulfoisophthalic acid as a sea component, and 50 parts of PET as an island component from a die with channels arranged to form 36 islands. The extruded filament was cooled by a cooling device using air of room temperature, and taken up at a speed of 5000 m/min using an ejector disposed at a position of 100 cm below the spinning die and using air of room temperature, being layered on a moving deposition device made from a wire mesh screen, to form a web. The conjugate fiber obtained in this case had a fiber fineness of 3 dtex and a circular cross sectional form. Then, NP treatment was performed to punch both the front and rear surfaces using 1 barb type needles at a punching density of 250 needles/cm² (500 needles/cm² in total), to obtain a nonwoven fabric composed of islands-in-sea type conjugate long fibers with an apparent density of 0.200 g/cm³. Subsequently, the nonwoven fabric was immersed in water heated to about 95°C to be shrunken for 2 minutes, and dried at 100°C to remove the water. The obtained sheet was immersed in an alkaline aqueous solution containing 100 g/L of sodium hydroxide and 15 g/L of a surfactant, to be impregnated with the alkaline aqueous solution by 112 wt% based on the weight of the sheet, immediately continuously treated for decreasing the weight in a box filled with steam of 90°C by microwaves for 5 minutes, washed with water and dried, to obtain a nonwoven fabric composed of ultrafine long fibers with a fiber fineness of about 0.042 dtex. The cross sectional form of the ultrafine fibers was almost circular, and R/r was 1.1. Then, the nonwoven fabric composed of ultrafine long fibers and the woven fabric of Production Example 1 were laminated in this order (the nonwoven fabric composed of ultrafine long fibers was above), and in this state, a nozzle plate with holes of 0.1 mm diameter arranged at 0.5 mm intervals (nozzle plate a) was used for performing WJP, to treat the front and rear surfaces alternately at a treatment speed of 10 m/min at a jet pressure of 15 MPa (4 times in total), for entangling the ultrafine fibers and laminating and integrating with the woven fabric. The cross section of the composite sheet cut in the direction perpendicular to the progress direction at WJP was observed with an electron microscope at a magnification of 100x. It was found that many ultrafine fibers passed through the woven fabric.

The surface of the composite sheet obtained as described above was buffed by a wide belt sander produced by Kikukawa Iron Works, Inc. using sand paper of silicon carbide abrasive grains with grain size 400, till the abrasion loss of the fiber sheet by buffing reached 3 wt%. Then, it was dyed with a disperse dye using a circular dyeing machine.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed. Further, the sheet was a well stretchable sheet excellent in extension rate and extension recovery rate.

### Working Example 2

The nonwoven fabric composed of staple fibers of Production Example 3, the woven fabric of Production Example 1 and the nonwoven fabric composed of ultrafine long fibers of Working Example 1 were laminated in this order (the nonwoven fabric composed of staple fibers was above), and in this state, the nozzle plate a was used for performing WJP, to treat the front and rear surfaces alternately at a treatment speed of 10 m/min at a jet pressure of 15 MPa (4 times in total), for entangling the ultrafine fibers and for laminating and integrating with the woven fabric. The section of the composite sheet obtained by cutting in the direction perpendicular to the progress direction at WJP was observed with an electron microscope at a magnification of 100x, and it was found that many ultrafine fibers passed through the woven fabric.

In succession, the same treatment as in Working Example 1 was performed to obtain a leather-like sheet.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed. Further, the sheet was a well stretchable sheet excellent in extension rate and extension recovery rate.

### Working Example 3

The nonwoven fabric composed of ultrafine long fibers of Working Example 1 and the knitted fabric of Production Example 2 were laminated in this order (the nonwoven fabric composed of ultrafine long fibers was above), and in this state, the nozzle plate a was used for performing WJP, to treat the front and rear surfaces alternately at a treatment speed of 10 m/min at a jet pressure of 15 MPa (4 times in total), for entangling the ultrafine fibers and for laminating and integrating with the woven fabric. The section of the composite sheet obtained by cutting in the direction perpendicular to the progress direction at WJP was observed with an electron microscope at a magnification of 100x, and it was found that many ultrafine fibers passed through the woven fabric.

In succession, the same treatment as in Working Example 1 was performed to obtain a leather-like sheet.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed.

### Working Example 4

A conjugate spinning apparatus heated to 290°C was used to extrude PET and PET copolymerized with 8 mol% of 5-sodium sulfoisophthalic acid at a ratio by weight of 50:50 from a die for forming six filaments of each polymer (12 filaments in total) in which PET and PET copolymerized with 8 mol% of 5-sodium sulfoisophthalic acid were disposed alternately radially in a hollow circular section (doughnut-like). The extruded filaments were cooled by a cooling device using air of room temperature, and taken up at a speed of 5000 m/min using an ejector disposed at a position of 100 cm below the spinning die and using air of room temperature, being layered on a moving deposition device made from a wire mesh screen, to form a web. The conjugate fibers obtained in this case had a fiber fineness of 1.2 dtex.

This nonwoven fabric composed of conjugate long fibers was used and treated as described in Working Example 1, to obtain a nonwoven fabric composed of ultrafine long fibers. Further, R/r was 2.3.

In succession, the treatment as in Working Example 1 was performed to obtain a leather-like sheet. The section of the composite sheet obtained by cutting in the direction perpendicular to the progress direction at WJP was observed with an electron microscope at a magnification of 100x, and it was found that many ultrafine fibers passed through the woven fabric.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed. Working Example 5

A conjugate spinning apparatus heated to 290°C was used to extrude 50 parts of polystyrene as a sea component and 50 parts of PET as an island component from a die with channels arranged to form 36 islands. The extruded filament was cooled by a cooling device using air of room temperature, and taken up at a speed of 5000 m/min using an ejector disposed at a position of 100 cm below the spinning die and using air of room temperature, being layered on a moving deposition device made from a wire mesh screen, to form a web. The conjugate fiber obtained in this case had a fiber fineness of 3 dtex and a circular sectional form. Then, NP treatment was performed to punch both the front and rear surfaces using 1 barb type needles at a punching density of 250 needles/cm² (500 needles/cm² in total), to obtain a nonwoven fabric composed of islands-in-sea type conjugate fibers with an apparent density of 0.200 g/cm³. Then, the nonwoven fabric was immersed in an aqueous solution containing 12 wt% of polyvinyl alcohol with a polymerization degree of 500 and a saponification degree of 88% and heated to about 95°C, to have polyvinyl alcohol deposited by 25% as solid content based on the weight of the nonwoven fabric, for being shrunken for 2 minutes simultaneously with being impregnated with polyvinyl alcohol (hereinafter referred to as PVA), followed by drying at 100°C to remove water. The obtained sheet was treated with trichlene of about 30°C till polystyrene was perfectly removed, to obtain a nonwoven fabric composed of ultrafine long fibers with a fiber fineness of about 0.042 dtex. The sectional form of the ultrafine fibers was almost circular, and R/r was 1.1. Subsequently, the nonwoven fabric composed of ultrafine long fibers and the woven fabric of Production Example 1 were laminated in this order (the nonwoven fabric composed of ultrafine long fibers was above), and in this state, the nozzle plate a was used for performing WJP, to treat the front and rear surfaces alternately at a treatment speed of 10 m/min at a jet pressure of 15 MPa (4 times in total), for removing PVA and for entangling the ultrafine fibers. The section of the composite sheet obtained by cutting in the direction perpendicular to the progress direction at WJP was observed with an electron microscope at a magnification of 100x, and it was found that many ultrafine fibers passed through the woven fabric.

The sheet was processed as in Working Example 1, to obtain a leather-like sheet.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed.

### Working Example 6

The leather-like sheet of Working Example 1 was immersed in an aqueous solution containing a softening agent (trade name "L-soft" N-500 Conc, produced by Ipposha Oil Industries Co., Ltd.) and fine colloidal silica particles (trade name "Al Duck" SP-65, produced by Ipposha Oil Industries Co., Ltd.), and wringed to achieve a colloidal silica content of 0.5 wt%, then blushed while being dried at 100°C.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed.

### Working Example 7

The leather-like sheet of Working Example 1 was immersed in an aqueous solution containing a softening agent (trade name "L-soft" N-500 Conc, produced by Ipposha Oil Industries Co., Ltd.) and also containing an aqueous emulsion of ethylene-vinyl acetate copolymer (trade name Sumika Flex (registered trademark) 755, produced by Sumika Chemtex Company, Limited), and wringed to achieve an ethylene-vinyl acetate copolymer content of 0.8 wt%, then blushed while being dried at 100°C.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed.

### Working Example 8

The leather-like sheet of Working Example 1 was immersed in an aqueous solution containing a softening agent (trade name "L-soft" N-500 Conc, produced by Ipposha Oil Industries Co., Ltd.) and also containing an aqueous emulsion of ethylene-vinyl acetate copolymer (trade name Sumika Flex (registered trademark) 755, produced by Sumika Chemtex Company, Limited), and wringed to achieve an ethylene-vinyl acetate copolymer content of 30 wt%, then blushed while being dried at 100°C.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed.

### Working Example 9

The nonwoven fabric composed of ultrafine long fibers of Working Example 1 and the woven fabric of Production Example 1 were laminated in this order (the nonwoven fabric composed of ultrafine long fibers was above), and in this state, a polyurethane-based adhesive was applied to stick them together, and they were bonded with dry heat of 100°C. In succession, the processing as in Working Example 1 was performed to obtain a leather-like sheet.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed. Further, the sheet was a well stretchable sheet excellent in extension rate and extension recovery rate.

### Working Example 10

A web was prepared as in Working Example 1 except that a conjugate spinning apparatus heated to 290°C was used to extrude PET and nylon 6 at a ratio by weight of 50: 50 from a die for forming six filaments of each polymer (12 filaments in total) with PET and nylon 6 disposed alternately radially in a hollow circular section (doughnut-like). The conjugate fibers obtained in this case had a fiber fineness of 1.2 dtex. Then, NP treatment was performed as in Working Example 1 (500 needles/cm² in total), to obtain a nonwoven fabric composed of conjugate long fibers with an apparent density of 0.200 g/cm³. Subsequently, the nonwoven fabric composed of conjugate long fibers and the woven fabric of Production Example 1 were laminated in this order (the nonwoven fabric composed of conjugate long fibers was above), and in this state, WJP was performed using a nozzle plate with holes of 0.14 mm diameter disposed at 0.7 intervals (nozzle plate b), to treat the front and rear surfaces alternately at a treatment speed of 10 m/min at a jet pressure of 35 MPa (4 times in total), for entangling the ultrafine fibers and for laminating and integrating with the woven fabric. Further, the conjugate fibers were physically split by water streams for conversion into ultrafine fibers. The section of the composite sheet cut in the direction perpendicular to the progress direction at WJP was observed with an electron microscope at a magnification of 100x, and it was found that many ultrafine fibers passed through the woven fabric. Further, the cross sectional form of the ultrafine fibers was almost circular, and R/r was 2.3.

The composite sheet obtained as described above was processed as in Working Example 1, to obtain a leather-like sheet.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed. Further, the sheet was a well stretchable sheet excellent in extension rate and extension recovery rate.

### Working Example 11

A web was prepared as in Working Example 1, except that a conjugate spinning apparatus heated to 290°C was used to extrude 50 parts of a copolyester consisting of 68 mol% of terephthalic acid, 17 mol% of isophthalic acid and 15 mol% of 5-sodium sulfoisophthalic acid as a sea component and 50 parts of PET as an island component from a die with channels arranged to form 36 islands. The conjugate fibers obtained in this case had a fiber fineness of 3 dtex and a circular sectional form. Then, NP treatment was performed as in Working Example 1 (500 needles/cm² in total), to obtain a nonwoven fabric composed of islands-in-sea type conjugate long fibers with an apparent density of 0.200 g/cm³. Subsequently, the nonwoven fabric composed of conjugate long fibers and the woven fabric of Production Example 1 were laminated in this order (the nonwoven fabric composed of conjugate long fibers was above), and in this case, WJP for jetting hot water of 95°C using the nozzle plate b was performed to treat the front and rear surfaces alternately at a treatment speed of 10 m/min at a jet pressure of 10 MPa (4 times in total). In succession, WJP of room temperature using the nozzle plate b was performed to treat the front and rear surfaces alternately at a treatment speed of 10 m/min at a jet pressure of 35 MPa (4 times in total), for entangling the ultrafine fibers and for laminating and integrating with the woven fabric. Further, the sea component of the conjugate fibers was dissolved by hot water, to be removed for conversion into ultrafine fibers. The ultrafine fibers had a fiber fineness of about 0.042 dtex, and the section of the composite sheet cut in the direction perpendicular to the progress direction at WJP was observed with an electron microscope at a magnification of 100x. It was found that many ultrafine fibers passed through the woven fabric. Further, the cross sectional form of the ultrafine fibers observed with an electron microscope was almost circular, and R/r was 1.1.

The composite sheet obtained as described above was processed as in Working Example 1, to obtain a leather-like sheet.

The obtained leather-like sheet was excellent as shown in Table 1. On the front and rear surfaces of the leather-like sheet, ranges of square shape with side lengths of at least 10 cm (10 cm square) were observed with an optical microscope at a magnification of 200x, but cut ends of the woven fabric could not be confirmed. Further, the sheet was a well stretchable sheet excellent in extension rate and extension recovery rate.

### Comparative Example 1

For the nonwoven fabric composed of ultrafine long fibers obtained as in Working Example 1, WJP using the nozzle plate a was performed to treat the front and rear surfaces alternately at a treatment speed of 10 m/min at a jet pressure of 8 MPa (4 times in total), for entangling the ultrafine fibers.

The surface of the sheet obtained as described above was buffed by a wide belt sander produced by Kikukawa Iron Works, Inc. using sand paper of silicon carbide abrasive grains with grain size 400, till the abrasion loss of the fiber sheet by buffing reached 3 wt%, and dyed with a disperse dye using a circular dyeing machine.

The obtained leather-like sheet was poor in abrasion resistance property though it had relatively soft hand as shown in Table 1.

### Comparative Example 2

A conjugate spinning apparatus heated to 290°C was used to extrude 50 parts of PET copolymerized with 8 mol% of 5-sodium sulfoisophthalic acid as a sea component and 50 parts of PET as an island component from a die with channels arranged to form 36 islands. The extruded filament was cooled by a cooling device using air of room temperature, and taken up at a speed of 5000 m/min by an ejector disposed at a position of 100 cm below the spinning die and using air of room temperature, being layered on a moving deposition device made from a wire mesh screen, to form a web. The conjugate fiber obtained in this case had a fiber fineness of 3 dtex and had a circular sectional form. This web and the woven fabric of Production Example 1 were laminated, and NP treatment was performed to treat from the side of the web and from the side of the woven fabric respectively at a punching density of 2000 needles/cm² using 1 barb type needles (4000 needles/cm² in total), to obtain a sheet in which the nonwoven fabric composed of islands-in-sea type conjugate long fibers with an apparent density of 0.255 g/cm³ and the woven fabric were integrated. Then, the sheet was immersed in water heated to about 95°C, to be shrunken for 2 minutes, and dried at 100°C to remove water. The obtained sheet was immersed in an alkaline aqueous solution containing 100 g/l of sodium hydroxide and 15 g/l of a surfactant, to be impregnated with the alkaline aqueous solution by 112 wt% based on the weight of the sheet, immediately continuously treated in a box filled with steam of 90°C using microwaves for 5 minutes, for weight loss, washed with water and dried, to obtain a sheet in which the nonwoven fabric composed of ultrafine long fibers with a fiber fineness of about 0.042 dtex and the woven fabric were integrated. The sectional form of the ultrafine fibers was almost circular, and R/r was 1.1. Then, WJP using the nozzle plate a was performed to treat the front and rear surfaces alternately at a treatment speed of 10 m/min at 15 MPa (4 times in total), for entangling the ultrafine fibers. The section of the composite sheet cut in the direction perpendicular to the progress direction at WJP was observed with an electron microscope at a magnification of 100x, and it was found that though many ultrafine fibers passed through the woven fabric, the woven fabric was partially cut by the NP treatment performed for integrating the nonwoven fabric and the woven fabric.

The surface of the composite sheet obtained as described above was buffed by a wide belt sander produced by Kikukawa Iron Works, Inc. using sand paper of silicon carbide abrasive grains with grain size 400, till the abrasion loss of the fiber sheet by buffing reached 3 wt%, and dyed with a disperse dye using a circular dyeing machine.

The obtained leather-like sheet was poor in abrasion resistance property though it had relatively soft hand as shown in Table 1. On the front and rear surfaces of the leather-like sheet, ranges of square shape with side lengths of at least 10 cm (10 cm square) were observed with an optical microscope at a magnification of 200x, and more than 50 cut ends were found in the woven fabric.
[Table 1]

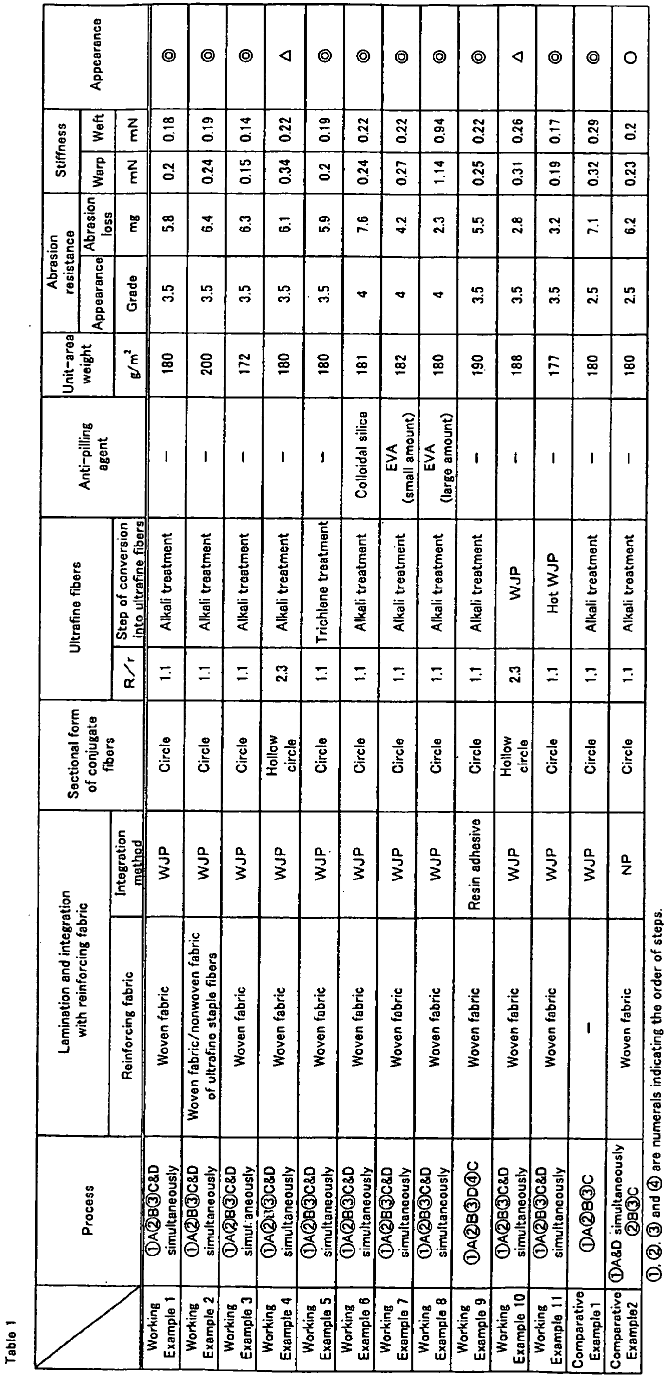

### [Industrial applicability]

According to this invention, even a nonwoven fabric substantially not containing any elastomer and mainly composed of a fiber material is used, a leather-like sheet with sufficient physical properties and appearance quality can be obtained. Since the leather-like sheet of this invention has such excellent features as recyclability, easy care property and yellowing resistance, it can of course be used as clothing, furniture, car seat, miscellaneous goods, abrasive cloth, wiper and filter, and above all, it can be especially preferably used as car seat and clothing owing to recyclability and characteristic hand.

## Claims

1. A leather-like sheet as a composite sheet consisting essentially of
a nonwoven fabric composed of ultrafine long fibers containing ultrafine fibers more than 100 mm long in which ultrafine fibers with a fiber fineness of 0.0001 to 0.5 dtex are entangled with each other, and
a woven or knitted fabric, and
optionally a binder composed of an elastomer at a content of less than 5 wt% based on the weight of fibers,
**characterized in that** at least some of the aforementioned ultrafine fibers pass through the woven or knitted fabric, and that when ranges of square shape with side lengths of at least 10 cm (at least 10 cm square) are observed with eyes or a microscope on the front and rear surfaces of the leather-like sheet five or more cut fiber ends do not exist among the fibers constituting the woven or knitted fabric, and that the appearance is grade 3 or higher while the abrasion loss is 10 mg or less in the evaluation of abrasion resistance, and that the sheet is substantially composed of only a fiber material of a non-elastic polymer.

2. A leather-like sheet, according to claim 1, wherein the ratio R/r of the diameter R of the minimum circumscribed circle to the diameter r of the maximum inscribed circle in the cross section of the aforementioned ultrafine fibers is 1 to 1.4.

3. A leather-like sheet, according to claim 1 or 2, wherein the stiffness is 0.1 to 1.0 mN measured in a bending repulsion test according to JIS L 1096 (1999) 8.20.1 method A (Gurley method).

4. A process for producing a leather-like sheet, comprising the step of spinning melting polymers at a speed of 3000 to 6000 m/min and collecting conjugate fibers with a fiber fineness of 1 to 50 dtex on a moving net under suction, followed by the following steps A, B, C and D, wherein the step A is followed by the steps B, C and D, and wherein the step C is performed simultaneously with or subsequently to the step B.
A. Step of treating the conjugate fibers by a needle punch, to form a nonwoven fabric
B. Step of forming ultrafine fibers with a fiber fineness of 0.0001 to 0.5 dtex from the conjugate fibers by a treatment of converting the conjugate fibers into bundles of ultrafine fibers
C. Step of treating the nonwoven fabric with a high velocity fluid by performing water jet punching treatment using water streams
D. Step of laminating and integrating the nonwoven fabric with a woven or knitted fabric by passing ultrafine fibers through the woven or knitted fabric.

5. A process for producing a leather-like sheet, according to claim 4, wherein the steps C and D are performed simultaneously.

6. A process for producing a leather-like sheet, according to any one of claims 4 through 5, wherein the ratio R/r of the diameter R of the minimum circumscribed circle to the radius r of the maximum inscribed circle in the cross section of the ultrafine fibers is 1 to 1.4.

7. A process for producing a leather-like sheet, according to any one of claims 4 through 6, wherein the treatment of converting the conjugate fibers into bundles of ultrafine fibers is a treatment by an alkali.

## Patentansprüche

1. Lederartiges Flächengebilde als ein Verbundflächengebilde im Wesentlichen bestehend aus
einem Faservliesstoff gebildet aus ultrafeinen langen Fasern, welche ultrafeine Fasern mit einer Länge von mehr als 100 mm enthalten, in dem ultrafeine Fasern mit einer Faserfeinheit von 0,0001 bis 0,5 dtex miteinander verfangen sind, und
einem Gewebe oder Maschenware, und
wahlweise einem Bindemittel gebildet aus einem Elastomer in einem Gehalt von weniger als 5 Gew.-% basierend auf dem Gewicht der Fasern,
**dadurch gekennzeichnet, dass** mindestens einige der vorgenannten ultrafeinen Fasern durch das Gewebe oder die Maschenware hindurch gehen, und dass, wenn quadratförmige Bereiche mit Seitenlängen von mindestens 10 cm (mindestens 10 cm Quadrat) mit dem Auge oder einem Mikroskop auf der vorderen und der hinteren Oberfläche des lederartigen Flächengebildes betrachtet werden, unter den Fasern, die das Gewebe oder die Maschenware bilden, 5 oder mehr durchschnittene Faserenden nicht vorkommen, und dass das Aussehen Grad 3 oder höher ist, während bei der Bewertung der Abriebfestigkeit der Abriebverlust 10 mg oder weniger ist, und dass das Flächengebilde im Wesentlichen nur aus einem Fasermaterial eines nicht elastischen Polymers gebildet ist.

2. Lederartiges Flächengebilde gemäß Anspruch 1, wobei das Verhältnis R/r vom Durchmesser R des minimalen Umkreises zum Durchmesser r des maximalen Inkreises im Querschnitt der vorgenannten ultrafeinen Fasern 1 bis 1,4 beträgt.

3. Lederartiges Flächengebilde gemäß Anspruch 1 oder 2, wobei die Steifigkeit gemessen in einem Biegewiderstandstest gemäß JIS L 1096 (1999) 8.20.1 Methode A (Gurley Methode) 0,1 bis 1,0 mN beträgt.

4. Verfahren zur Herstellung eines lederartigen Flächengebildes, umfassend den Schritt des Spinnens schmelzender Polymere bei einer Geschwindigkeit von 3000 bis 6000 m/min und des Sammelns konjugierter Fasern mit einer Faserfeinheit von 1 bis 50 dtex auf einem sich bewegenden Netz unter Ansaugung, gefolgt von den folgenden Schritten A, B, C und D, wobei der Schritt A gefolgt wird durch die Schritte B, C, und D, und wobei der Schritt C gleichzeitig mit oder nachfolgend zu dem Schritt B durchgeführt wird,
A. Schritt der Bearbeitung der konjugierten Fasern durch eine Vernadelung, um einen Faservliesstoff zu bilden,
B. Schritt des Bildens ultrafeiner Fasern mit einer Faserfeinheit von 0,0001 bis 0,5 dtex aus den konjugierten Fasern durch eine Behandlung, die die konjugierten Fasern in Bündel ultrafeiner Fasern umwandelt,
C. Schritt der Behandlung des Faservliesstoffs mit einem Hochgeschwindigkeitsfluid durch Durchführung von Wasserstrahlvernadelung unter Verwendung von Wasserströmen,
D. Schritt der Laminierung und Integrierung des Faservliesstoffs mit einem Gewebe oder Maschenware, indem ultrafeine Fasern durch das Gewebe oder die Maschenware hindurch geführt werden.

5. Verfahren zur Herstellung eines lederartigen Flächengebildes gemäß Anspruch 4, wobei die Schritte C und D gleichzeitig durchgeführt werden.

6. Verfahren zur Herstellung eines lederartigen Flächengebildes gemäß Anspruch 4 oder 5, wobei das Verhältnis R/r vom Durchmesser R des minimalen Umkreises zum Radius r des maximalen Inkreises im Querschnitt der ultrafeinen Fasern 1 bis 1,4 beträgt.

7. Verfahren zur Herstellung eines lederartigen Flächengebildes gemäß irgendeinem der Ansprüche 4 bis 6, wobei die Behandlung, die die konjugierten Fasern in Bündel ultrafeiner Fasern umwandelt, eine Behandlung mit einer alkalischen Substanz ist.

## Revendications

1. Feuille similaire au cuir sous forme d'une feuille composite constituée essentiellement
d'un tissu non tissé composé de fibres longues ultrafines contenant des fibres ultrafines ayant une longueur supérieure à 100 mm où des fibres ultrafines ayant une finesse de fibre de 0,0001 à 0,5 dtex sont entremêlées les unes avec les autres, et
d'un tissu tissé ou tricoté, et
facultativement d'un liant composé d'un élastomère à une teneur inférieure à 5% en poids sur la base du poids des fibres,
**caractérisée en ce qu'**au moins une partie des fibres ultrafines précitées traverse le tissu tissé ou tricoté, et **en ce que**, lorsque des plages de forme carrée ayant des longueurs latérales d'au moins 10 cm (au moins 10 cm carré) sont observées avec les yeux ou un microscope sur les surfaces avant et arrière de la feuille similaire au cuir, cinq extrémités de fibres coupées ou plus n'existant pas parmi les fibres constituant le tissu tissé ou tricoté, et **en ce que** l'aspect est de grade 3 ou plus tandis que la perte par abrasion est de 10 mg ou moins dans l'évaluation de la résistance à l'abrasion, et **en ce que** la feuille est essentiellement composée d'un seul matériau de fibres d'un polymère non-élastique.

2. Feuille similaire au cuir, selon la revendication 1, dans laquelle le rapport R/r du diamètre R du cercle circonscrit minimal sur le diamètre r du cercle inscrit maximal dans la section transversale des fibres ultrafines précitées est de 1 à 1,4.

3. Feuille similaire au cuir, selon la revendication 1 ou 2, dans laquelle la rigidité est de 0,1 à 1,0 mN mesurée dans le test de répulsion à la flexion selon le procédé A de la norme JIS L 1096 (1999) 8.20.1 (procédé de Gurley).

4. Processus de production d'une feuille similaire au cuir, comprenant l'étape de filage de polymères de fusion à une vitesse allant de 3000 à 6000 m/min et de collecte des fibres conjuguées avec une finesse de fibre allant de 1 à 50 dtex sur un filet mobile sous aspiration, suivie des étapes A, B, C et D, où l'étape A est suivie des étapes B, C et D, et où l'étape C est exécutée simultanément avec l'étape B ou après celle-ci.
A. étape de traitement des fibres conjuguées par aiguilletage, pour former un tissu non tissé
B. étape de formation de fibres ultrafines ayant une finesse de fibre allant de 0,0001 à 0,5 dtex à partir des fibres conjuguées par un traitement de conversion des fibres conjuguées en des faisceaux de fibres ultrafines
C. étape de traitement du tissu non tissé avec un fluide à vitesse élevée en effectuant un traitement de perforation à jet d'eau utilisant des flux d'eau
D. étape de stratification et d'intégration du tissu non tissé avec un tissu tissé ou tricoté en faisant passer des fibres ultrafines à travers le tissu tissé ou tricoté.

5. Processus de production d'une feuille similaire au cuir, selon la revendication 4, dans lequel les étapes C et D sont exécutées simultanément.

6. Processus de production d'une feuille similaire au cuir, selon l'une quelconque des revendications 4 à 5, dans lequel le rapport R/r du diamètre R du cercle circonscrit minimal sur le rayon r du cercle inscrit maximal dans la section transversale des fibres ultrafines est de 1 à 1,4.

7. Processus de production d'une feuille similaire au cuir, selon l'une quelconque des revendications 4 à 6, dans lequel le traitement de conversion des fibres conjuguées en des faisceaux de fibres ultrafines est un traitement par un alcali.
